# EUROPÄISCHE PATENTSCHRIFT

(11) **EP 4 059 788 B1**
(45) Veröffentlichungstag und Bekanntmachung des Hinweises auf die Patenterteilung: **12.03.2025**
(21) Anmeldenummer: 22161908.3
(22) Anmeldetag: 14.03.2022
(51) Int. Cl.: B60T 7/04, B60T 13/74

(54) **VERFAHREN ZUR ÜBERWACHUNG DES LÖSEVERHALTENS EINER ELEKTROMECHANISCHEN RADBREMSE EINES FAHRZEUGS**
METHOD FOR MONITORING THE RELEASE BEHAVIOR OF AN ELECTROMECHANICAL WHEEL BRAKE OF A VEHICLE
PROCÉDÉ DE SURVEILLANCE DU COMPORTEMENT DE LIBÉRATION D'UN FREIN DE ROUE ÉLECTROMÉCANIQUE D'UN VÉHICULE

(30) Priorität: 18.03.2021 DE 102021202612
(43) Veröffentlichungstag der Anmeldung: 21.09.2022
(73) Patentinhaber: Continental Automotive Technologies GmbH, 30175 Hannover (DE)
(72) Erfinder: Kircher, Andreas, 60488 Frankfurt am Main (DE); Böhm, Jürgen, 60488 Frankfurt am Main (DE); Jungbecker, Johann, 60488 Frankfurt am Main (DE)
(74) Vertreter: Continental Corporation

(56) Entgegenhaltungen:
- EP-A1- 1 085 240
- JP-A- 2018 536 581
- US-A1- 2006 261 764

## Beschreibung

Die Erfindung betrifft ein Verfahren zur Überwachung des Löseverhaltens einer elektromechanischen Radbremse eines Fahrzeugs.

Elektromechanische Radbremsen als Betriebsbremsen für Kraftfahrzeuge sind in vielfältigen Varianten im Stand der Technik bekannt. Eine solche elektromechanische Bremse für Kraftfahrzeuge ist beispielhaft in der DE 10 2017 206 798 A1 beschrieben. Die beschriebene elektromechanische Bremse umfasst ein Bremssattelgehäuse und einen Bremsbelaghalter, eine Antriebseinheit zum Erzeugen eines Drehmomentes, ein Rotations-Translationsgetriebe und eine Getriebeeinheit zum Übertragen des Drehmomentes auf das Rotations-Translationsgetriebe. Das Drehmoment der Antriebseinheit wird dabei durch die Getriebeeinheit und das Rotations-Translationsgetriebe in eine Translationsbewegung eines Zuspannelements umgewandelt, welches zu einem Andrücken von Bremsbelägen an eine Bremsscheibe führt.

Eine weitere elektromechanische Bremse für Kraftfahrzeuge ist in der EP 1 085 240 A1 beschrieben. Hierzu ist an jeder Bremse ein Aktuator vorgesehen, welcher durch einen Controller gesteuert wird. Der Controller kann den Motor innerhalb eines Bremsbetriebsbereichs so ansteuern, dass eine Bremskraft in Übereinstimmung mit einer Eingangsgröße eines Bremspedals erzeugt wird.

Derartige elektromechanische Radbremsen sind häufig dadurch gekennzeichnet, dass durch eine hohe mechanische Übersetzung zwischen der Antriebseinheit und dem Zuspannelement existiert. Durch die hohe mechanische Übersetzung ist der mechanische Wirkungsgrad <100%, sodass ein passives, selbstständiges Lösen der Bremse nach Beendung einer Ansteuerung der Antriebseinheit nicht automatisch sichergestellt ist. Ein solches selbstständiges Lösen ist dabei üblicherweise stark abhängig von der Beanspruchung der Komponenten der Radbremse über deren Laufzeit und von einem Schmierungszustand der Komponenten des Getriebes und des Antriebs der Radbremse.

Gleichzeitig ist ein selbstständiges Lösen einer solchen elektromechanischen Bremse im passiven, also unbestromten Zustand eine sicherheitskritische Funktion. So könnte beispielsweise eine gespannte elektromechanische Radbremse bei einem Stromausfall der Radbremse zu einem instabilen Fahrzustand des Fahrzeugs führen, wenn sich die dann nicht mehr steuerbare Radbremse nicht selbstständig und vollständig löst.

Aus dem Stand der Technik ist es ferner bekannt, ein passives Lösen einer elektromechanischen Bremse, also eine Reduzierung der Zuspannkraft ohne elektronische Ansteuerung des Aktuators, durch mechanische Systeme, wie beispielsweise eine Befederung von Lagerungselementen der Radbremse zu unterstützen. Ein solches System ist beispielhaft in der DE 10 2019 219 331 A1 beschrieben. Ein solches System steigert zwar die Wahrscheinlichkeit eines selbsttätigen Lösens, kann jedoch das vorgesehene Löseverhalten der Radbremse nicht in jedem Fall sicherstellen.

Vor diesem Hintergrund liegt der vorliegenden Anmeldung die Aufgabe zugrunde, ein Verfahren anzugeben, das eine Überwachung des Löseverhaltens einer elektromechanischen Radbremse eines Fahrzeugs und mithin eine Bewarnung des Fahrzeugführers ermöglicht, sollte das Löseverhalten der Radbremse ein kritisches Ausmaß erreichen.

Die Erfindung betrifft ein Verfahren zur Überwachung des Löseverhaltens einer elektromechanischen Radbremse eines Fahrzeugs, wobei die elektromechanische Radbremse wenigstens einen elektrisch steuerbaren Kraftsteller aufweist, wobei der Kraftsteller dazu ausgebildet ist, Reibpartner einer Radbremse mit einer Zuspannkraft zur Verzögerung des Fahrzeugs zu beaufschlagen. Das Verfahren weist dabei das Ansteuern des Kraftstellers nach einem definierten Steuerungsmuster, wobei das Steuerungsmuster von einem aktuellen Betriebszustand der Radbremse und/oder einem aktuellen Betriebszustand weiterer Radbremsen des Fahrzeugs und/oder einem aktuellen Betriebszustand des Fahrzeugs abhängt, das Unterbrechen der Ansteuerung des Kraftstellers zu einem definierten Zeitpunkt, das Überwachen von Betriebsparametern der Radbremse für eine definierte Zeitspanne nach der Unterbrechung der Ansteuerung und das Bestimmen des Löseverhaltens der Radbremse durch das Ermitteln einer Reaktion des Kraftstellers auf die Unterbrechung der Ansteuerung anhand der ermittelten Betriebsparameter auf.

Unter einem "Kraftsteller" ist dabei eine Vorrichtung zu verstehen, die ein Element der Radbremse, im vorliegenden Fall die Reibpartner der Reibbremse, mit einer steuerbaren Kraft beaufschlagen kann, die die Reibpartner so aufeinander presst, dass eine die Rotation eines Fahrzeugrads verzögernde Bremskraft auf das mit der Radbremse verbundene Fahrzeugrad wirkt. Bei den Reibpartnern kann es sich dabei beispielsweise um eine starr mit dem Fahrzeugrad verbundene Bremsscheibe und auf die Bremsscheibe wirkende Reibbeläge handeln, wobei die Reibbeläge durch den Kraftsteller mit einer Kraft in Richtung der Bremsscheibe beaufschlagt werden können. Die Kraft, die dabei auf die Reibbeläge in Richtung der Bremsscheibe wirkt, wird als "Zuspannkraft" verstanden. Allerdings ist die Erfindung nicht auf die beschriebene Ausgestaltung der Radbremse als Scheibenbremse beschränkt. Vielmehr kann der Erfindungsgedanke auch in einem anderen Bremsentyp, wie beispielsweise einer elektromechanischen Trommelbremse, umgesetzt sein.

Der Erfindung liegt die Überlegung zugrunde, durch Ansteuerung des Kraftstellers nach einem definierten und mithin replizierbaren Muster und anschließender Unterbrechung der Ansteuerung eine Situation zu simulieren, in der eine gezielte Steuerung des Kraftstellers, beispielsweise aufgrund eines Stromausfalls, nicht mehr möglich ist. Aus der Reaktion des Kraftstellers auf diese Unterbrechung, die aus einer Beobachtung der Betriebsparameter der Bremse ermittelt werden kann, kann dann überprüft werden, ob sich die Radbremse auch im Fehlerfall von selbst in dem notwendigen Maß lösen würde. Wird dabei ermittelt, dass eine Selbstlösung nicht in ausreichendem Maß stattfinden würde, kann beispielsweise eine Warnung an den Fahrzeugführer ausgegeben werden. Ferner kann die Ansteuerung der betroffenen Radbremse entsprechend angepasst werden, sodass beispielsweise durch eine Änderung der Bremskraftverteilung die Radbremse zur Durchführung einer Bremsanforderung weniger stark eingebunden wird.

Nach einer Ausführungsform ist dabei vorgesehen, dass ein erstes Steuerungsmuster das Einstellen und Halten einer definierten Zuspannkraft durch den Kraftsteller der Radbremse beinhaltet, wobei das erste Steuerungsmuster nur bei stillstehendem Fahrzeug durchgeführt wird. Durch dieses Steuerungsmuster wird der Fall simuliert, dass die Steuerung der Radbremse bei anliegender Zuspannkraft plötzlich ausfällt. Für diesen Fall sollte sich im Idealfall die Zuspannkraft der Radbremse selbstständig so weit reduzieren, dass eine eventuell verbleibende Restspannkraft das Fahrverhalten des Fahrzeugs nicht wesentlich beeinflusst. Wird im Zuge des Verfahrens jedoch ermittelt, dass die Zuspannkraft nach Unterbrechung der Ansteuerung nicht ausreichend stark abnimmt, kann dies als Hinweis auf einen sicherheitskritischen Verschleiß- oder Schmierzustand der Komponenten der Radbremsen sein.

Die Durchführung des ersten Steuerungsmuster im Stillstand des Fahrzeugs soll dabei vermeiden, dass sich ein für den Fahrzeugführer unerwartetes Fahrverhalten bei einer Durchführung des Verfahrens einstellt. Der Stillstand des Fahrzeugs zur Ausführung des ersten Steuerungsmusters wird dabei nach einer bevorzugten Ausführungsform dadurch gewährleistet, dass das Fahrzeug durch die Ausführung einer Parkbremsfunktion durch wenigstens einen Teil der Radbremsen des Fahrzeugs im Stillstand gehalten wird. Im Zuge der Parkbremsfunktion kann dabei vorgesehen, dass wenigstens eine Teilmenge der Radbremsen so angesteuert wird, dass die jeweiligen Kraftsteller insgesamt eine Zuspannkraft einstellen, die ausreicht, ein Wegrollen des Fahrzeugs zu verhindern. Dabei kann eine Parkbremsfunktion insbesondere auch nur durch einen Teil der Radbremsen umgesetzt werden, beispielsweise durch die Radbremsen einer Hinterachse des Fahrzeugs. Das erste Steuerungsmuster kann dabei grundsätzlich sowohl an jenen Radbremsen durchgeführt werden, die nicht an der Umsetzung der Parkbremsfunktion beteiligt sind, als auch an den Radbremsen, die das Fahrzeug in der Parkposition halten.

Um bei aktivierter Parkbremsfunktion trotz der Unterbrechung der Ansteuerung einer an der Umsetzung der Parkbremsfunktion beteiligten Radbremse im Rahmen des erfindungsgemäßen Verfahrens sicherzustellen, dass das Fahrzeug weiterhin sicher in der Parkbremsposition gehalten wird, ist nach einer weiteren Ausführungsform vorgesehen, dass vor dem Unterbrechen der Ansteuerung der Radbremse im ersten Steuerungsmuster ermittelt wird, ob die weiteren Radbremsen des Fahrzeugs insgesamt eine Bremskraft aufbringen, die ausreicht, das Fahrzeug im Stillstand zu halten, wobei die definierte Zuspannkraft der Radbremse auf einen Wert eingestellt wird, der größer als eine Zuspannkraft zur Umsetzung der Parkbremsfunktion ist, wenn die durch die weiteren Radbremsen aufgebrachte Bremskraft nicht ausreicht, das Fahrzeug im Stillstand zu halten.

Dabei sind im Wesentlichen zwei Fälle zu unterscheiden. Im ersten Fall wird das erste Steuerungsmuster an einer Radbremse ausgeführt, die nicht an der Umsetzung der Parkbremsfunktion beteiligt ist. In diesem Fall kann das erfindungsgemäße Verfahren uneingeschränkt an der betreffenden Radbremse durchgeführt werden, da sich an der Parkbremssituation hierbei nichts ändert.

Im zweiten Fall wird das Verfahren an einer Radbremse durchgeführt, die an der Ausführung der Parkbremsfunktion beteiligt ist. In diesem Fall muss sichergestellt werden, dass durch die Unterbrechung der Ansteuerung des entsprechenden Kraftstellers die anliegende Bremskraft nicht so weit abfällt, dass das Fahrzeug nicht mehr sicher in seiner Parkposition gehalten werden kann. Dies wird nach der Ausführungsform dadurch erreicht, dass vorab ermittelt wird, ob eine Reduktion der Zuspannkraft der untersuchten Radbremse für die Aufrechterhaltung der Parkbremsposition problematisch werden kann. Ist dies der Fall, wird zunächst die Zuspannkraft der Radbremse so weit erhöht, dass eine Unterbrechung der Ansteuerung und mithin ein teilweiser Abfall der Zuspannkraft nicht dazu führt, dass die in Summe durch die Radbremsen des Fahrzeugs aufgebrachte Bremskraft unter ein Bremskraftniveau fällt, das zur Aufrechterhaltung der Parkbremsfunktion notwendig ist.

Nach einer weiteren Ausführungsform ist ferner vorgesehen, dass der Kraftsteller einen elektromotorisch betätigbaren Druckkolben oder ein elektromotorisch betätigbares Spannelement aufweist, wobei eine durch den Kraftsteller bereitgestellte Zuspannkraft durch eine Beaufschlagung des Druckkolbens oder Spannelements mit einer Kraft entlang einer Zuspannrichtung der Radbremse durch den Kraftsteller erzeugt wird. Bevorzugt ist dabei auf dem Druckkolben ein Reibbelag angeordnet, sodass der Reibbelag bei einer Verschiebung des Druckkolbens oder Spannelements in Zuspannrichtung in Kontakt mit einer Bremsscheibe gebracht und mit einer Kraft in Richtung der Bremsscheibe beaufschlagt wird.

Bei einer solchen Konfiguration der Radbremse ist nach einer weiteren Ausführungsform vorgesehen, dass ein zweites Steuerungsmuster das Beschleunigen des Druckkolbens oder Spannelements entlang der Zuspannrichtung ohne Erzeugung einer Zuspannkraft beinhaltet. Das Steuerungsmuster wird demnach bevorzugt durchgeführt, solange ein ausreichendes Lüftspiel zwischen den Reibpartnern der Radbremse vorhanden ist, sich die Reibpartner also nicht berühren. Dabei wird der Druckkolben bevorzugt auf eine definierte Geschwindigkeit oder bis zu einer definierten Position entlang des möglichen Verschiebewegs beschleunigt und bei Erreichen der Geschwindigkeit oder Position die Ansteuerung des Kraftstellers unterbrochen und mithin die Beschleunigung des Druckkolbens durch den Kraftsteller beendet. Aus der Verzögerung des Druckkolbens nach der Unterbrechung der Ansteuerung kann abgeschätzt werden, wie leichtgängig die Mechanik der Radbremse ist, was wiederum einen Hinweis darauf gibt, wie stark bzw. wie schnell eine anliegende Zuspannkraft der Radbremse bei einem Ausfall der Steuerung bzw. Energieversorgung abgebaut würde.

Dabei muss nicht zwingend abgewartet werden, bis der Druckkolben oder das Spannelement vollständig zum Stillstand kommt. Vielmehr kann auch ermittelt werden, wie lange es dauert, bis der Druckkolben oder das Spannelement von einer Ausgangsgeschwindigkeit nach Beendigung der Beschleunigung auf eine Zielgeschwindigkeit gebremst wurde. Alternativ kann nach erfolgter Beschleunigung auch ermittelt werden, welche Zeit der Druckkolben oder das Spannelement im Freilauf benötigt, um eine definierte Stellposition entlang der Zuspannrichtung zu erreichen.

Nach einer weiteren Ausführungsform ist ferner vorgesehen, dass ein drittes Steuerungsmuster das Reduzieren einer infolge einer Bremsbetätigung anliegenden Zuspannkraft beinhaltet. Dieses Steuerungsmuster kann beispielsweise eingesetzt werden, wenn eine Bremsanforderung beendet wird, beispielsweise indem die Betätigung eines Bremspedals aufgehoben wird, sodass die Radbremsen zum Abbau einer anliegenden Zuspannkraft angesteuert werden. Dabei sinkt zunächst kontrolliert die Zuspannkraft der Radbremse von einem Ausgangswert ausgehend ab. Im Rahmen des dritten Steuerungsmusters ist dabei vorgesehen, wenigstens einen Teil dieses eigentlich kontrollierten Lösevorgangs unkontrolliert erfolgen zu lassen. So kann im Wirkbetrieb der Radbremse ermittelt werden, ob sich die Bremse auch bei einem Ausfall der Steuerung weiterhin in ausreichendem Maß lösen würde.

Zur Bestimmung des Löseverhaltens ist nach einer weiteren Ausführungsform ferner vorgesehen, dass die nach einer Unterbrechung der Ansteuerung überwachten Betriebsparameter der Radbremse den zeitlichen Verlauf einer anliegenden Zuspannkraft und/oder den zeitlichen Verlauf eines Betätigungswegs der Radbremse beinhalten. Die Zuspannkraft, wie auch der Betätigungsweg können dabei beispielsweise über vorhandene Sensorik zur Steuerung des Kraftstellers ermittelt werden und geben einen direkten Aufschluss über das Verhalten des Kraftstellers im Freilauf. Als "Betätigungsweg" wird dabei insbesondere ein Verschiebeweg des Druckkolbens oder Spannelements entlang einer Zuspannrichtung verstanden. Ein solcher Betätigungsweg kann dabei entweder direkt durch entsprechende Wegsensoren gemessen, oder aus Betriebsparametern des Kraftstellers, beispielsweise einer Motorlage eines elektromotorischen Antriebs und der Getriebelage eines dem Motor nachgeschalteten Getriebes ermittelt werden.

Dabei ist nach einer weiteren Ausführungsform vorgesehen, dass das Löseverhalten aus einer Differenz des Betätigungswegs oder aus einer Differenz der Zuspannkraft über eine Zeitdifferenz ermittelt wird, wobei das Löseverhalten als unzureichend erkannt wird, wenn die ermittelte Differenz des Betätigungswegs oder die ermittelte Differenz der Zuspannkraft einen Schwellwert unterschreitet. Dabei zeigt eine Unterschreitung des Schwellwerts grade an, dass die Mechanik der Radbremse träger ist als sie sein sollte, sodass von einem sicheren Löseverhalten der Radbremse nicht mehr ausgegangen werden kann. Ferner kann hier auch die Differenz der Zuspannkraft über der Differenz des Betätigungswegs betrachtet werden.

Nach einer weiteren Ausführungsform ist dabei vorgesehen, dass das Löseverhalten aus einem zeitlichen Gradienten des Betätigungswegs oder der Zuspannkraft ermittelt wird, wobei das Löseverhalten als unzureichend erkannt wird, wenn der ermittelte Gradient des Betätigungswegs oder der ermittelte Gradient der Zuspannkraft einen Schwellwert unterschreitet.

Bei den vorstehend beschriebenen Varianten zur Bestimmung des Löseverhaltens der Radbremse kann neben einer direkten Betrachtung des Verhaltens des Kraftstellers auch vorgesehen sein, dass weitere Parameter berücksichtigt werden, die das Löseverhalten des Kraftstellers beeinflussen. So kann insbesondere auch eine Temperatur der Radbremse oder von Komponenten der Radbremse, insbesondere des Kraftstellers berücksichtigt werden. So beeinflusst die Temperatur beispielsweise die Viskosität von in der Radbremse verwendeten Schmierstoffen, was sich direkt auf das Löseverhalten der Radbremse niederschlagen kann. Durch eine Betrachtung und Berücksichtigung der Temperatur kann demnach unterschieden werden, ob ein als unzureichend erkanntes Löseverhalten nur auf einer zu geringen Temperatur beruht, oder ob tatsächlich ein kritischer Verschleißzustand oder Defekt der Radbremse vorliegt.

Ferner werden die unterschiedlichen Steuerungsmuster bevorzugt mehrfach mit unterschiedlichen Parametern durchgeführt, sodass man aus den Teilergebnissen für die unterschiedlichen Parameter ein tatsächliches Löseverhalten interpolieren kann. So kann es beispielsweise bei dem ersten Steuerungsmuster vorgesehen sein, dass unterschiedliche Niveaus der Zuspannkraft verwendet werden, sodass das Löseverhalten ausgehend von unterschiedlichen Startbedingungen bewertet werden kann. Ferner können bei dem zweiten Steuerungsmuster unterschiedliche Geschwindigkeiten des Druckkolbens geprüft werden. Bei dem dritten Steuerungsmuster kann der Punkt des Lösevorgangs, repräsentiert durch eine anliegende Restspannkraft oder eine Zeit seit dem Beginn der Reduktion der Zuspannkraft, ab dem das Lösen der Bremse selbsttätig geschehen soll, variiert werden.

Ferner kann vorgesehen sein, dass vor der Durchführung des Betätigungsmusters der Kraftsteller der zu untersuchenden Radbremse einfach oder mehrfach um einen definierten Hub bewegt wird. Dies kann insbesondere dann vorteilhaft sein, wenn der Kraftsteller längere Zeit in einer bestimmten Betätigungsposition gehalten wurde, wodurch sich das Losbrechmoment des Kraftstellers erhöhen kann. Dieses veränderte Losbrechmoment beeinflusst wiederum die Bestimmung des Selbstlöseverhaltens der Radbremse. Durch ein einmaliges oder mehrmaliges leichtes Hin- und Herbewegen des Kraftstellers kann das Losbrechmoment des Kraftstellers wiederum nivelliert werden, sodass die Genauigkeit einer anschließenden Untersuchung des Löseverhaltens verbessert ist.

Im Folgenden werden bevorzugte Ausgestaltungen der Erfindung anhand der Zeichnungen näher erläutert. Dabei zeigen:
- Figur 1: ein Flussdiagramm eines beispielsgemäßen Verfahrens,
- Figur 2: eine schematische Darstellung eines beispielhaften Kraft-Weg-Verlaufs einer elektromechanischen Radbremse,
- Figur 3: eine weitere schematische Darstellung des beispielhaften Kraft-Weg-Verlaufs einer elektromechanischen Radbremse und
- Figur 4: eine schematische Darstellung des Verhaltens eines Kraftstellers bei Durchführung eines beispielhaften Steuerungsmusters.

Im Folgenden werden einander ähnliche oder identische Merkmale mit denselben Bezugszeichen gekennzeichnet.

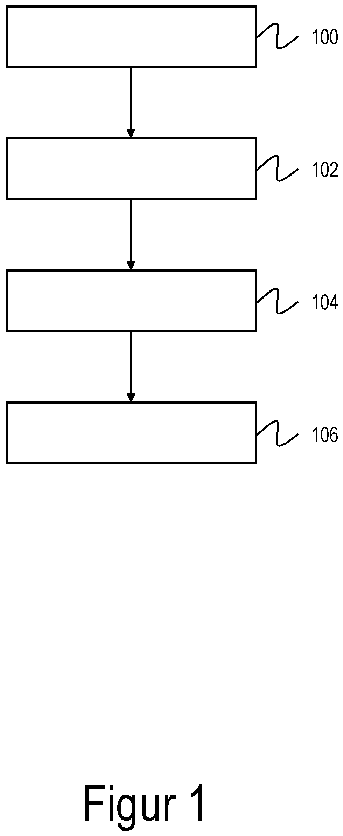

Die Figur 1 zeigt ein Flussdiagramm einer beispielsgemäßen Ausführungsform eines erfindungsgemäßen Verfahrens. Dabei wird in einem ersten Verfahrensschritt 100 der Kraftsteller einer elektromechanischen Radbremse nach einem definierten Steuerungsmuster angesteuert. Bei dem Kraftsteller kann es sich beispielsweise um eine Anordnung mit einem elektromotorischen Antrieb handeln, dem eine Getriebeanordnung mit einem Rotations-Translations-Getriebe nachgeschaltet ist, sodass eine Rotation einer Antriebswelle des Antriebs in eine Translationsbewegung umgesetzt wird. An das Getriebe ist bevorzugt ein Druckkolben oder ein Spannelement einer Radbremse gekoppelt, sodass eine Rotation der Antriebswelle des Antriebs bzw. ein auf die Antriebswelle wirkendes Drehmoment in eine Translationsbewegung des Druckkolbens oder Spannelements bzw. eine auf den Druckkolben oder das Spannelement wirkende Kraft entlang einer Zuspannrichtung umgesetzt wird.

Durch die Bewegung von Druckkolben oder Spannelement bzw. eine Beaufschlagung dieser Elemente mit einer Kraft werden bevorzugt Reibpartner einer Reibbremse in Kontakt miteinander gebracht bzw. mit einer durch die Steuerung des elektromotorischen Antriebs steuerbaren Kraft aufeinander gepresst. Durch die so entstehende Reibungskraft wird ein Bremsmoment auf ein mit der Radbremse in Wirkverbindung stehendes Fahrzeugrad ausgeübt, die eine Rotation des Fahrzeugrades bremst oder verhindert.

Das Steuerungsmuster, nach dem der Kraftsteller angesteuert wird, ist dabei von einem aktuellen Betriebszustand der betrachteten Radbremse abhängig. Der Betriebszustand der Radbremse beschreibt beispielsweise, ob durch die Radbremse aktuell eine Bremskraft auf das zugeordnete Fahrzeugrad bewirkt wird, oder sich die Radbremse in geöffnetem Zustand befindet, die Reibpartner der Radbremse also nicht in Kontakt sind. Ferner kann hierbei auch einfließen, ob die Radbremse aktuell dazu genutzt wird, das Fahrzeug zu verzögern, oder ob durch die Radbremse eine Parkbremsfunktion umgesetzt wird, die ein Losrollen des Fahrzeugs aus einer Parkbremsposition verhindern soll. Demzufolge kann auch ein Betriebszustand des Fahrzeugs einen Einfluss darauf haben, welche Art Steuerungsmuster im Rahmen des Verfahrens eingesetzt wird. Der Betriebszustand des Fahrzeugs kann dabei beispielsweise aus einer Raddrehzahl eines der betrachteten Radbremse zugeordneten Rades ermittelt werden. Zuletzt kann bei der Auswahl des verwendeten Steuerungsmusters auch berücksichtigt werden, wie der aktuelle Betriebszustand der weiteren Radbremsen des Fahrzeugs ist, also ob durch die weiteren Radbremsen aktuell Bremskräfte erzeugt werden und wie hoch diese Bremskräfte ggfs. sind.

Anschließend wird in Schritt 102 die Ansteuerung des Kraftstellers, also du Ausführung des Steuerungsmusters, zu einem definierten Zeitpunkt unterbrochen. Die Unterbrechung erfolgt dabei bevorzugt dergestalt, dass die zuvor im Rahmen des Steuerungsmusters kontrollierte Ansteuerung des Kraftstellers ausgesetzt wird, also keine weiteren Steuerbefehle mehr an den Kraftsteller ausgegeben werden. Auf diese Weise kann beispielsweise eine Unterbrechung der Energieversorgung der Radbremse oder ein Ausfall der Steuerung aufgrund einer Unterbrechung der Signalübermittlung oder eines Fehlers der Steuereinheit simuliert werden.

Anschließend wird in Schritt 104 ermittelt, wie sich die Radbremse und insbesondere der Kraftsteller mit den dem Kraftsteller in der Wirkkette nachgeordneten Elementen (Getriebe und Reibpartner) nach der Unterbrechung der Ansteuerung verhält. Hierzu werden die Betriebsparameter der Radbremse für eine definierte Zeitspanne nach der Unterbrechung der Ansteuerung überwacht. Bevorzugt wird dabei ein Verlauf der Position eines Druckkolbens oder Spannelements oder ein über Druckkolben oder Spannelement bewirkte Zuspannkraft über die verstrichene Zeit seit Unterbrechung der Ansteuerung aufgenommen.

Aus den so ermittelten Daten wird anschließend in Schritt 106 ermittelt, ob das Löseverhalten der Radbremse bei einer Unterbrechung der Ansteuerung ausreicht, sodass bei einem Ausfall der Steuerung oder Energieversorgung der Radbremse ein ausreichendes Selbstlösen weiterhin gegeben ist. Sollte dabei erkannt werden, dass das Löseverhalten unzureichend ist, also bei einem Fehlerfall ein zu langsamer Abbau einer anliegenden Bremskraft vorliegen oder die Radbremse bei einer zu hohen Zuspannkraft verharren, kann ferner vorgesehen sein, dass die Radbremse nicht mehr oder nur eingeschränkt zur Umsetzung einer Bremsanforderung eingesetzt und eine entsprechende Warnung an den Fahrzeugführer ausgegeben wird.

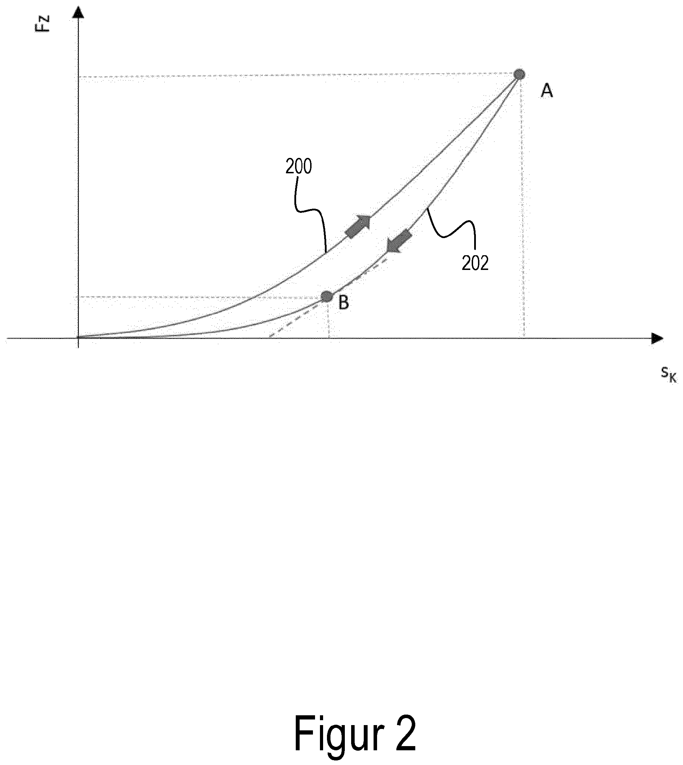

Unterschiedliche Varianten für Steuerungsmuster werden im Folgenden mit Bezug auf die Figuren 2, 3 und 4 exemplarisch beschrieben.

Hierzu zeigt die Figur 2 einen exemplarischen Verlauf der Zuspannkraft F_{z} einer elektromechanischen Radbremse über dem Verschiebeweg s_{K} eines Druckkolbens oder eines Spannelements der elektromechanischen Radbremse. Dabei unterscheidet sich der Verlauf der Zuspannkraft bei einem Zuspannen der Radbremse, also einer Steigerung der Zuspannkraft 200 gegenüber dem Verlauf der Zuspannkraft bei einem Lösen der Radbremse, also einer Reduzierung der Zuspannkraft 202.

Eine erste Variante eines Steuerungsmusters kann dabei dergestalt sein, dass der Kraftsteller eine definierte Zuspannkraft A einstellt und diese über einen längeren Zeitraum aufrechterhält. Dies kann beispielsweise bei der Umsetzung einer Parkbremsfunktion vorgesehen sein, wobei in diesem Fall die entsprechende Zuspannkraft üblicherweise so gewählt ist, dass durch die Summe der Radbremsen, die an der Umsetzung der Parkbremsfunktion beteiligt sind, eine Bremskraft bereitgestellt wird, die ein Losrollen des Fahrzeugs verhindert.

Bei Unterbrechung der Ansteuerung des Kraftstellers wird der Druckkolben oder das Spannelement aufgrund einer üblicherweise in der zugespannten Radbremse gespeicherten Verformungsenergie der Radbremse, insbesondere des Bremssattels, mit einer Kraft beaufschlagt, die zu einem Lösen der Bremse, also einer Bewegung des Druckkolbens oder Spannelements entgegen der Zuspannrichtung führt. Dabei wird auch die anliegende Zuspannkraft reduziert, wobei das Maß, wie sehr sich die Zuspannkraft bei einer Bewegung des Druckkolbens oder Spannelements über eine definierte Strecke ändert Aufschluss darüber gibt, ob sich die Radbremse in ausreichendem Maß bei einem Fehlerfall selbst öffnen würde. Neben einer Betrachtung der anliegenden Zuspannkraft F_{z} über dem Verschiebeweg s_{K} kann alternativ oder zusätzlich auch die anliegende Zuspannkraft F_{z} über der Zeit t seit der Unterbrechung der Ansteuerung ermittelt und betrachtet werden. Ferner können sowohl Differenzen von Zuspannkräften ΔF_{z} über unterschiedlichen Zeitdifferenzen Δt oder Differenzen des Verschiebeweg Δs_{K} betrachtet oder entsprechenden Gradienten gebildet werden, um das Löseverhalten der Radbremse zu quantifizieren.

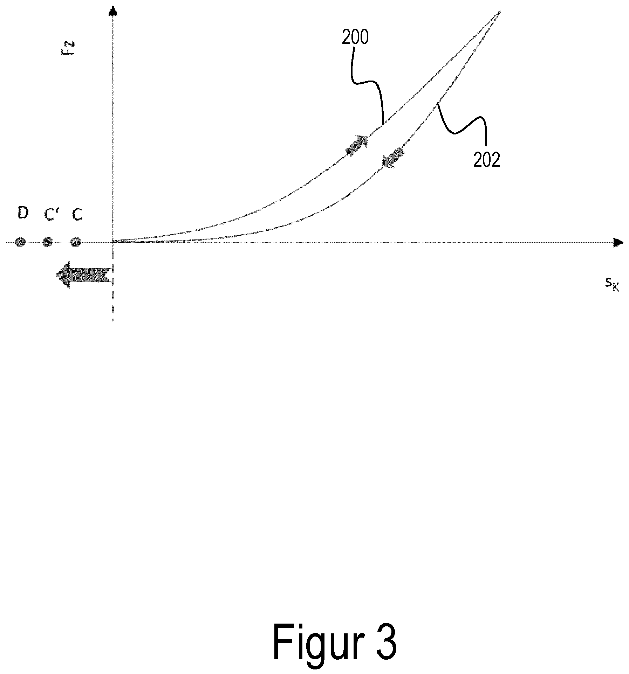

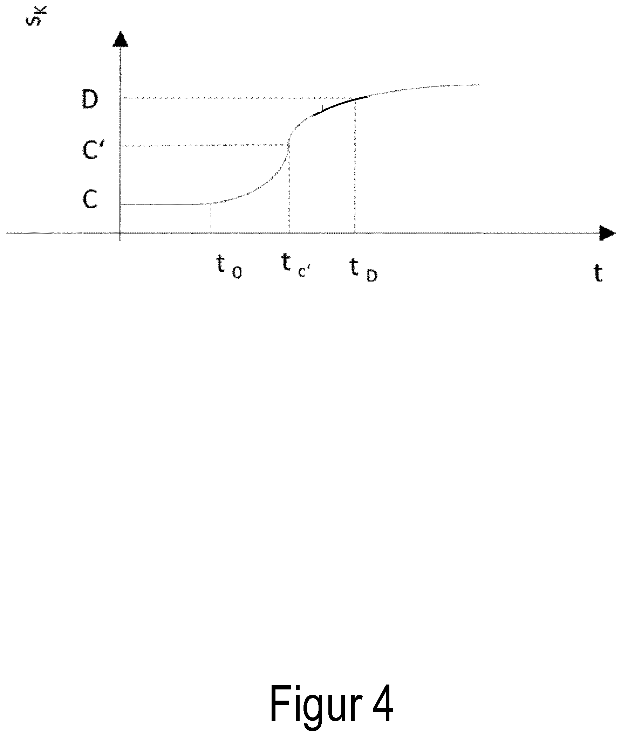

Ein Beispiel für ein zweites Steuerungsmuster wird nachfolgend mit Bezug auf die Figuren 3 und 4 beschrieben. Die Figur 3 zeigt dabei nochmals den bereits mit Bezug auf Figur 2 beschriebenen exemplarischen Verlauf der Zuspannkraft F_{z} einer elektromechanischen Radbremse über dem Verschiebeweg s_{K} eines Druckkolbens oder eines Spannelements der elektromechanischen Radbremse. In diesem Fall ist jedoch der Bereich des Verschiebewegs s_{K} relevant, der links von der vertikalen Koordinatenachse angeordnet ist. In diesem Bereich findet eine Verschiebung des Druckkolbens oder Spannelements statt, ohne dabei eine Zuspannkraft aufzubauen. Folglich beschreibt der Ursprung des Koordinatensystems genau jenen Punkt entlang des Verschiebewegs s_{K}, an dem die Reibpartner der Radbremse in Kontakt treten. Der Bereich links des Koordinatenursprungs beschreibt dabei den Lüftspielbereich der Radbremse, also jenen Bereich, bei dem die Reibpartner nicht in Kontakt treten und sich daher bei einer Verschiebung der Reibpartner zunächst auch keine Zuspannkraft aufbaut.

Als zweites Steuerungsmuster ist nun in diesem Bereich vorgesehen, dass der Druckkolben oder das Spannelement ausgehend von einem Punkt C entlang des Verschiebewegs s_{K} beschleunigt wird. Sobald der Druckkolben oder das Spannelement den Punkt C' erreichen, wird die Ansteuerung des Kraftstellers unterbrochen. Anschließend wird beobachtet, wie lange der Druckkolben bzw. das Spannelement braucht, um den Punkt D entlang des Verschiebewegs s_{K} zu erreichen.

Hierzu ist exemplarisch in der Figur 4 die Position des Druckkolbens oder Spannelements s_{K} entlang des Verschiebewegs über der Zeit t während einer Durchführung des zweiten Steuerungsmusters dargestellt. Dabei startet ausgehend von einer Position C zum Zeitpunkt to zunächst eine beschleunigte Bewegung des Druckkolbens oder Spannelements. Am Punkt C' bzw. zu dem hierzu korrespondierenden Zeitpunkt t'_{c} wird die Ansteuerung des Kraftstellers unterbrochen, sodass der Druckkolben bzw. das Spannelement auslaufen und die Geschwindigkeit wieder sinkt, bis in Punkt D zu einem korrespondieren Zeitpunkt t_{D} die Geschwindigkeit einen Schwellwert unterschreitet. Aus der Dauer Δt = t_{D} - t'_{c} kann dann ermittelt werden, ob der Freilauf des Kraftstellers hinreichend leicht ist, sodass von einem sicheren Löseverhalten der elektromechanischen Radbremse ausgegangen werden kann.

Wiederum ausgehend von der Darstellung der Figur 2 kann auch ein drittes Steuerungsmuster beispielhaft beschrieben werden. Dabei wird zunächst der Kraftsteller so angesteuert, dass in Punkt A eine definierte Zuspannkraft anliegt. Dabei kann es sich beispielsweise um eine Zuspannkraft infolge einer Bremsanforderung handeln, die beispielsweise durch eine Betätigung eines Bremspedals durch einen Fahrzeugführer ausgelöst sein kann. Anschließend wird aufgrund einer Beendung der Bremsanforderung kontrolliert die Zuspannkraft F_{z} durch entsprechende Ansteuerung des Kraftstellers entlang der Kurve 202 abgebaut. Zu einem definierten Punkt B wird jedoch die Ansteuerung des Kraftstellers unterbrochen, sodass ein Teil des Kraftabbaus durch die Radbremse selbsttätig erfolgt. Betrachtet man hierbei beispielsweise wiederum den Gradienten der Zuspannkraft F_{z} über dem Verschiebeweg s_{K} oder der seit der Unterbrechung der Ansteuerung verstrichenen Zeit t, kann wiederum die Fähigkeit der Radbremse zur Selbstlösung bestimmt werden.

Die zuvor beschriebenen Steuerungsmuster können dabei beliebig zu einem Überwachungsprofil für die elektromechanische Radbremse kombiniert werden, sodass in unterschiedlichen Situationen auf unterschiedlichen Wegen das Löseverhalten der Radbremse ermittelt werden kann.

## Patentansprüche

1. Verfahren zur Überwachung des Löseverhaltens einer elektromechanischen Radbremse eines Fahrzeugs, wobei die elektromechanische Radbremse wenigstens einen elektrisch steuerbaren Kraftsteller aufweist, wobei der Kraftsteller dazu ausgebildet ist, Reibpartner einer Radbremse mit einer Zuspannkraft zur Verzögerung des Fahrzeugs zu beaufschlagen, wobei das Verfahren die nachfolgenden Schritte aufweist:
• Ansteuern des Kraftstellers nach einem definierten Steuerungsmuster, wobei das Steuerungsmuster von einem aktuellen Betriebszustand der Radbremse und/oder einem aktuellen Betriebszustand weiterer Radbremsen des Fahrzeugs und/oder einem aktuellen Betriebszustand des Fahrzeugs abhängt (100),
• Unterbrechen der Ansteuerung des Kraftstellers zu einem definierten Zeitpunkt (102),
• Überwachen von Betriebsparametern der Radbremse für eine definierte Zeitspanne nach der Unterbrechung der Ansteuerung (104) und
• Bestimmen des Löseverhaltens der Radbremse durch das Ermitteln einer Reaktion des Kraftstellers auf die Unterbrechung der Ansteuerung anhand der ermittelten Betriebsparameter (106).

2. Verfahren nach Anspruch 1, **dadurch gekennzeichnet, dass** ein erstes Steuerungsmuster das Einstellen und Halten einer definierten Zuspannkraft durch den Kraftsteller der Radbremse beinhaltet, wobei das erste Steuerungsmuster nur bei stillstehendem Fahrzeug durchgeführt wird.

3. Verfahren nach Anspruch 2, **dadurch gekennzeichnet, dass** das Fahrzeug durch die Ausführung einer Parkbremsfunktion durch wenigstens einen Teil der Radbremsen des Fahrzeugs im Stillstand gehalten wird.

4. Verfahren nach Anspruch 3, **dadurch gekennzeichnet, dass** vor dem Unterbrechen der Ansteuerung der Radbremse im ersten Steuerungsmuster ermittelt wird, ob die weiteren Radbremsen des Fahrzeugs insgesamt eine Bremskraft aufbringen, die ausreicht, das Fahrzeug im Stillstand zu halten, wobei die definierte Zuspannkraft der Radbremse auf einen Wert eingestellt wird, der größer als eine Zuspannkraft zur Umsetzung der Parkbremsfunktion ist, wenn die durch die weiteren Radbremsen aufgebrachte Bremskraft nicht ausreicht, das Fahrzeug im Stillstand zu halten.

5. Verfahren nach einem der vorherigen Ansprüche, **dadurch gekennzeichnet, dass** der Kraftsteller einen elektromotorisch betätigbaren Druckkolben oder ein elektromotorisch betätigbares Spannelement aufweist, wobei eine durch den Kraftsteller bereitgestellte Zuspannkraft durch eine Beaufschlagung des Druckkolbens oder Spannelements mit einer Kraft entlang einer Zuspannrichtung der Radbremse durch den Kraftsteller erzeugt wird.

6. Verfahren nach Anspruch 5, **dadurch gekennzeichnet, dass** ein zweites Steuerungsmuster das Beschleunigen des Druckkolbens oder Spannelements entlang der Zuspannrichtung ohne Erzeugung einer Zuspannkraft beinhaltet.

7. Verfahren nach einem der vorherigen Ansprüche, **dadurch gekennzeichnet, dass** ein drittes Steuerungsmuster das Reduzieren einer infolge einer Bremsbetätigung anliegenden Zuspannkraft beinhaltet.

8. Verfahren nach einem der vorherigen Ansprüche, **dadurch gekennzeichnet, dass** die nach einer Unterbrechung der Ansteuerung überwachten Betriebsparameter der Radbremse den zeitlichen Verlauf einer anliegenden Zuspannkraft und/oder den zeitlichen Verlauf eines Betätigungswegs der Radbremse beinhalten.

9. Verfahren nach Anspruch 8, **dadurch gekennzeichnet, dass** das Löseverhalten aus einer Differenz des Betätigungswegs oder aus einer Differenz der Zuspannkraft über eine Zeitdifferenz ermittelt wird, wobei das Löseverhalten als unzureichend erkannt wird, wenn die ermittelte Differenz des Betätigungswegs oder die ermittelte Differenz der Zuspannkraft einen Schwellwert unterschreitet.

10. Verfahren nach Anspruch 8 oder 9, **dadurch gekennzeichnet, dass** das Löseverhalten aus einem zeitlichen Gradienten des Betätigungswegs oder der Zuspannkraft ermittelt wird, wobei das Löseverhalten als unzureichend erkannt wird, wenn der ermittelte Gradient des Betätigungswegs oder der ermittelte Gradient der Zuspannkraft einen Schwellwert unterschreitet.

## Claims

1. Method for monitoring the release behaviour of an electromechanical wheel brake of a vehicle, the electromechanical wheel brake having at least one electrically controllable force actuator, the force actuator being configured to apply a brake-application force to friction partners of a wheel brake for the purposes of decelerating the vehicle, the method having the following steps:
• activating the force actuator in accordance with a defined control pattern, the control pattern being dependent on a present operating state of the wheel brake and/or a present operating state of further wheel brakes of the vehicle and/or a present operating state of the vehicle (100),
• interrupting the activation of the force actuator at a defined point in time (102),
• monitoring operating parameters of the wheel brake for a defined period of time after the interruption of the activation (104), and
• determining the release behaviour of the wheel brake by ascertaining a reaction of the force actuator to the interruption of the activation on the basis of the ascertained operating parameters (106).

2. Method according to Claim 1, **characterized in that** a first control pattern comprises the setting and holding of a defined brake-application force by the force actuator of the wheel brake, the first control pattern being implemented only when the vehicle is stationary.

3. Method according to Claim 2, **characterized in that** the implementation of a parking brake function causes the vehicle to be held stationary by at least a proportion of the wheel brakes of the vehicle.

4. Method according to Claim 3, **characterized in that**, before the interruption of the activation of the wheel brake in the first control pattern, it is ascertained whether the further wheel brakes of the vehicle are collectively imparting a braking force that is sufficient to hold the vehicle stationary, the defined brake-application force of the wheel brake being set to a value higher than a brake-application force for implementing the parking brake function if the braking force imparted by the further wheel brakes is not sufficient to hold the vehicle stationary.

5. Method according to any one of the preceding claims, **characterized in that** the force actuator has a pressure piston that is actuatable by electric motor or an application element that is actuatable by electric motor, a brake-application force provided by the force actuator being generated by application of a force to the pressure piston or application element along a brake-application direction of the wheel brake by the force actuator.

6. Method according to Claim 5, **characterized in that** a second control pattern comprises the acceleration of the pressure piston or application element along the brake-application direction without generation of a brake-application force.

7. Method according to any one of the preceding claims, **characterized in that** a third control pattern comprises the reduction of a brake-application force that is acting owing to a brake actuation.

8. Method according to any one of the preceding claims, **characterized in that** the operating parameters of the wheel brake that are monitored after an interruption of the activation include the profile with respect to time of an acting brake-application force and/or the profile with respect to time of an actuating travel of the wheel brake.

9. Method according to Claim 8, **characterized in that** the release behaviour is ascertained from a difference in the actuating travel or from a difference in the brake-application force over a time difference, the release behaviour being identified as being insufficient if the ascertained difference in the actuating travel or the ascertained difference in the brake-application force is below a threshold value.

10. Method according to Claim 8 or 9, **characterized in that** the release behaviour is ascertained from a gradient with respect to time of the actuating travel or of the brake-application force, the release behaviour being identified as being insufficient if the ascertained gradient of the actuating travel or the ascertained gradient of the brake-application force is below a threshold value.

## Revendications

1. Procédé permettant de surveiller le comportement de relâchement d'un frein de roue électromécanique d'un véhicule, le frein de roue électromécanique présentant au moins un actionneur de force à commande électrique, l'actionneur de force étant réalisé pour soumettre les partenaires de friction d'un frein de roue à une force d'application de frein pour décélérer le véhicule, le procédé présentant les étapes suivantes consistant à :
• piloter l'actionneur de force selon un schéma de commande défini, le schéma de commande dépendant d'un état de fonctionnement actuel du frein de roue et/ou d'un état de fonctionnement actuel d'autres freins de roue du véhicule et/ou d'un état de fonctionnement du véhicule (100),
• interrompre le pilotage de l'actionneur de force à un instant défini (102),
• surveiller des paramètres de fonctionnement du frein de roue pendant une période de temps définie après l'interruption du pilotage (104), et
• déterminer le comportement de relâchement du frein de roue en établissant une réaction de l'actionneur de force à l'interruption du pilotage à l'aide des paramètres de fonctionnement établis (106).

2. Procédé selon la revendication 1, **caractérisé en ce qu'**un premier schéma de commande comporte le réglage et le maintien d'une force d'application de frein définie par l'actionneur de force du frein de roue, le premier schéma de commande n'étant exécuté que si le véhicule est à l'arrêt.

3. Procédé selon la revendication 2, **caractérisé en ce que** le véhicule est maintenu à l'arrêt par l'exécution d'une fonction de frein de stationnement par au moins une partie des freins de roue du véhicule.

4. Procédé selon la revendication 3, **caractérisé en ce qu'**avant l'interruption du pilotage du frein de roue dans le premier schéma de commande, il est établi si les autres freins de roue du véhicule fournissent globalement une force de freinage qui suffit à maintenir le véhicule à l'arrêt, dans lequel la force d'application de frein définie du frein de roue est réglée sur une valeur qui est supérieure à une force d'application de frein pour mettre en œuvre la fonction de frein de stationnement si la force de freinage fournie par les autres freins de roue ne suffit pas à maintenir le véhicule à l'arrêt.

5. Procédé selon l'une quelconque des revendications précédentes, **caractérisé en ce que** l'actionneur de force présente un piston de compression à actionnement électromoteur ou un élément de serrage actionné de manière électromotrice, dans lequel une force d'application de frein fournie par l'actionneur de force est générée en soumettant le piston de compression ou l'élément de serrage à une force le long d'une direction d'application de frein du frein de roue par l'actionneur de force.

6. Procédé selon la revendication 5, **caractérisé en ce qu'**un deuxième schéma de commande comporte l'accélération du piston de compression ou de l'élément de serrage le long de la direction d'application de frein sans produire de force d'application de frein.

7. Procédé selon l'une quelconque des revendications précédentes, **caractérisé en ce qu'**un troisième schéma de commande comporte la réduction d'une force d'application de frein présente suite à un actionnement de frein.

8. Procédé selon l'une quelconque des revendications précédentes, **caractérisé en ce que** les paramètres de fonctionnement du frein de roue, surveillées après une interruption du pilotage comportent la courbe dans le temps d'une force d'application de frein présente et/ou la courbe dans le temps d'un chemin d'actionnement du frein de roue.

9. Procédé selon la revendication 8, **caractérisé en ce que** le comportement de relâchement est établi à partir d'une différence du chemin d'actionnement ou d'une différence de la force d'application de frein par rapport à une différence de temps, dans lequel le comportement de relâchement est identifié comme insuffisant si la différence établie du chemin d'actionnement ou la différence établie de la force d'application de frein soupasse une valeur seuil.

10. Procédé selon la revendication 8 ou 9, **caractérisé en ce que** le comportement de relâchement est établi à partir d'un gradient temporel du chemin d'actionnement ou de la force d'application de frein, le comportement de relâchement étant identifié comme insuffisant si le gradient établi du chemin d'actionnement ou le gradient établi de la force d'application de frein soupasse une valeur seuil.
